# EUROPÄISCHE PATENTSCHRIFT

(11) **EP 0 778 070 B1**
(45) Veröffentlichungstag und Bekanntmachung des Hinweises auf die Patenterteilung: **24.04.2002**
(21) Anmeldenummer: 96119520.3
(22) Anmeldetag: 05.12.1996
(51) Int. Cl.: B01D 53/86, B01J 19/12, B01D 53/00

(54) **Verfahren zur Abluftreinigung**
Process for cleaning exhaust air
Procédé pour la purification d'air d'échappement

(30) Priorität: 09.12.1995 DE 19546061
(43) Veröffentlichungstag der Anmeldung: 11.06.1997
(73) Patentinhaber: Schröder, Werner, 31542 Bad Nenndorf (DE)
(72) Erfinder: Schröder, Werner, 31542 Bad Nenndorf (DE)
(74) Vertreter: Joppich, Martin, Dr.-Ing.

(56) Entgegenhaltungen:
- WO-A-91/00708
- WO-A-93/19838
- DE-A- 3 913 968
- US-A- 5 230 220
- DATABASE WPI Section Ch, Week 9518 Derwent Publications Ltd., London, GB; Class D22, AN 95-136047 XP002027784 & JP 07 060 058 A (COSMO GIKEN KK) , 7.März 1995
- DATABASE WPI Section Ch, Week 9525 Derwent Publications Ltd., London, GB; Class J01, AN 95-190249 XP002027785 & JP 07 108 138 A (AGENCY OF IND SCI & TECHNOLOGY) , 25.April 1995

## Beschreibung

Die Erfindung betrifft ein Verfahren zur Reinigung von schadstoffhaltiger, gasförmige Kohlenwasserstoff-Emissionen enthaltender Abluft in einem Abluftleitkanal unter Einsatz einer das energetische Niveau der Kohlenwasserstoffe anhebenden UV Strahlung und eines Katalysators und eine Vorrichtung zur Durchführung des Verfahrens.

Durch die DE 43 17 199 A 1 ist ein Verfahren zur UV-Anregung von Luftschadstoffen und gleichzeitigem katalytischen Schadstoffabbau bekannt geworden, bei dem mittels einer UV Strahlung das elektro-chemische Potential der reaktiven Substanzen angehoben und ein exothermer chemischer Prozeß ausgelöst wird. Die angeregten Substanzen werden dabei durch eine spezielle Mischtechnik während des Anregungszustandes an eine katalytisch aktive Oberfläche geführt, wo sie unter direkter Einwirkung der UV-C Strahlung reagieren. Dieses Verfahren weist jedoch den Nachteil auf, daß lediglich eine Erhöhung des elektrochemischen Potentials der reaktiven Substanzen erfolgt. Gleichzeitig wird eine direkte UV-Katalyse durchgeführt, die es erforderlich macht, die gesamte aktive Oberfläche des Katalysators der UV-Strahlung auszusetzen. Hieraus resultiert, daß lediglich eine sehr kleine KatalysatorOberfläche zur Verfügung steht, so daß schon aus diesem Grunde das Verfahren in seiner Leistung stark eingeschränkt ist. Eine nachgeschaltete zusätzliche Katalysator-Kammer ist nicht geeignet, die Durchsatzleistung zu erhöhen.

Durch die DE 43 05 344 ist es auch bereits bekannt geworden, in Gasen enthaltene hoch-toxische halogenierte Verbindungen durch Oxidation, unter Verwendung von Wasserstoffperoxid, abzubauen. Hier ist es auch bereits beschrieben, daß der Abbau von PCDDs und PCDFs durch eine Behandlung der Gase mit Wasserstoffperoxid unter gleichzeitiger UV-Bestrahlung erfolgen kann. Im übrigen wird hier das Gas in Gegenwart von Wasserstoffperoxid über einen im wesentlichen anorganischen Feststoffkontakt, insbesondere Pyrogene oder gefällte Kieselsäure oder Aluminiumsilikat, geleitet. Es läßt sich hier zwar bereits der Schadstoffgehalt erheblich reduzieren, nachteilig ist es jedoch, daß hier der apparative Aufwand sehr hoch ist, der an sich nur infolge der hier zu entfernenden hochkonzentrierten und hochtoxischen Schadstoffanteile gerechtfertigt erscheint.

In JP 07 060 058 A ist ein Photokatalyse-Verfahren beschrieben, bei dem eine UV-Strahlung von vorzugsweise 185 nm in der vorbeiströmenden Abluft Ozon erzeugt. Der Abluftleitkanal ist auf seiner Innenseite mit Titan beschichtet, das an der Oberfläche durch das vorhandene Ozon zu Titandioxid oxidiert. Die in Verbindung mit dem Titandioxid eintretende Photokatalyse bewirkt einen Luftreinigungseffekt. Zum Abbau von überschüssigem Ozon in der Abluft ist ein nachgeschalteter Katalysator vorgesehen. Zusätzlich wird beschrieben, dass der photokatalytische Effekt auch ohne UV-Bestrahlung erreicht werden kann, wenn die Innenwandung des Ablaufleitkanals direkt mit Titandioxid beschichtet wird.

Aus JP 06 091 137 A ist ein Photokatalyse-Verfahren in Kombination mit einer katalytischen Oxidation bekannt, wobei ein spezieller dreistufiger Katalysator vorausgesetzt wird. In einer ersten Stufe wird in einem Titandioxid-Katalysator unter UV-Bestrahlung mit einer Wellenlänge von 184 nm Ozon erzeugt. In einer zweiten Stufe ist sodann ein Katalysator zur katalytischen Oxidation vorgesehen, der vorzugsweise aus wasserabweisenden Zeolithen besteht. In einer dritten Stufe ist schließlich wiederum ein Titandioxid-Katalysator unter UV-Bestrahlung mit einer Wellenlänge von 254 nm für den Abbau überschüssigen Ozons vorgesehen, wobei in Kombination mit den vorangegangenen Stufen eine insgesamt luftreinigende Wirkung erzielt wird.

In DE 44 23 397 A1 ist eine katalytische Oxidation in Kombination mit einer elektrischen Gasentladung offenbart. Als katalytische Materialen werden Edelmetalle, insbesondere Platin und/oder Paladium, sowie Nichtedelmetalle, Metalloxide, Keramiken und Zeolithe genannt.

In dem Artikel "Photooxidation von organischen Abluftinhaltstoffen mit kurzwelliger UV-Strahlung", Chem.-Ing. Tech 61 (1989) Nr. 7, Seite 548 bis 551 ist die Photooxidation von organischen Abluft-Inhaltsstoffen mit kurzwelliger UV-Strahlung beschrieben. Als Strahlungsquelle wird ein Quecksilberdampf-Niederdruck-Strahler genannt, dessen Spektrum hauptsächlich Strahlung der Wellenlängen 185 nm und 254 nm aufweist. Nicht erwähnt ist die Kombination des Verfahrens mit einem nachgeschalteten Katalysator.

Der Erfindung liegt die Aufgabe zugrunde, ein Verfahren und eine Vorrichtung zur Abluftreinigung zu schaffen, die sich durch einen einfachen Aufbau auszeichnet und die einen geringen Energieeinsatz erfordert.

Diese Aufgabe wird erfindungsgemäß durch die Merkmale der Ansprüche 1 und 7 gelöst. Die Lösung beruht auf der Kombination einer Photooxidation und einer katalytischen Oxidation. Die weitere Ausgestaltung der Erfindung ist den Unteransprüchen zu entnehmen.

Dadurch, daß die Abluft in einem ersten Abschnitt des Abluftleitkanals einer UV-C Strahlung einer Wellenlänge von unterhalb 300 nm ausgesetzt wird, die eine Anregung der Kohlenwasserstoffe auf höhere energetische Niveaus bewirkt und außerdem einer UV-C Strahlung einer Wellenlänge von vorzugsweise etwa 185 nm ausgesetzt wird, die zusätzlich eine Bildung von Ozon, von molekularem Sauerstoff und Radikalen aus dem Ozon bewirkt, wobei eine teilweise Oxidation der Kohlenwasserstoffmoleküle in der Gasphase erfolgt, und daß in einem sich anschließenden zweiten Abschnitt des Abluftleitkanals eine katalytische Oxidation der Kohlenwasserstoffmoleküle an der inneren Oberfläche eines von porösem Trägermaterial gebildeten Katalysators durchgeführt wird, wobei die Kohlenwasserstoffmoleküle adsorbiert, dann auf der aktiven Oberfläche durch das zusätzlich gebildete Ozon oxidiert und von der Oberfläche des Katalysators in Form von H₂O und CO₂ als Reaktionsprodukte entfernt werden, ist es überraschenderweise gelungen, eine sehr effektive katalytische Oxidation der Schadstoffe bereits bei Raumtemperatur zu erreichen.

Grundsätzlich bewirkt die Einwirkung der UV-C Strahlung einer Wellenlänge von vorzugsweise etwa 185 nm im ersten Abschnitt des Abluftleitkanals eine Bildung großer Mengen an Ozon, das als Reaktionspartner zur Verfügung steht und zusätzlich im zweiten Abschnitt zu einer sehr vorteilhaften verstärkten katalytischen Oxidation der Kohlenwasserstoffe führt. Es lassen sich so dort hohe Konzentrationen von Kohlenwasserstoffen abbauen. Gleichzeitig wird jedoch überschüssiges Ozon an der Oberfläche des Katalysators zu molekularem Sauerstoff abgebaut. Das erzeugte überschüssige Ozon bewirkt folglich in durchaus überraschender Weise keinerlei Umweltschädigung, die an sich zu erwarten gewesen wäre.

Das erfindungsgemäße Verfahren zeichnet sich dadurch aus, daß bei Durchsatzmengen zwischen 1.000 bis 10.000 m³/h mittels vergleichsweise einfacher Mittel ein hoher Reinigungsgrad erzielt werden kann, wobei die Schadstoffe als Reaktionsprodukte in Form von H₂O und CO₂ entsorgt werden. Herkömmliche Verfahren für vergleichbare Durchsatzmengen sind deutlich aufwendiger.

Gemäß einem bevorzugten Verfahren gelangt UV-C Strahlung mit den Wellenlängen 185 nm und 254 nm zum Einsatz. Die Wellenlänge 185 nm dient dabei vorzugsweise der Ozonbildung. Die Wellenlänge 254 nm dient vorzugsweise der Anregung der Kohlenwasserstoffe. Bei einer derartigen Auslegung der UV-C Strahlung ist es möglich, die beiden genannten Wirkungen äußerst effektiv zu gestalten. Gegebenenfalls kann eine zusätzliche Verstärkung der Ozonbildung mittels einer Ionisation durch zusätzlich insbesondere in den ersten Abschnitt des Abluftleitkanals eingebrachter Koronaentladungen erreicht werden.

Insbesondere, sofern die gereinigte Abluft als Zuluft Innenräumen zugeführt werden soll, hat es sich als vorteilhaft erwiesen, wenn in einem nachgeschalteten dritten Abschnitt eine zusätzliche Ionisation der Abluft erfolgt. Hierdurch ist es möglich, durch Anreicherung mit Sauerstoffionen die Qualität der Luft, insbesondere als Atemluft, zu verbessern.

Weiterhin ist es vorgesehen, daß die Oxidation vorzugsweise durch katalytische Aktivkohle erfolgt. Hier ergibt sich der Vorteil, daß die Aktivkohle kostengünstig reaktivierbar ist. Im übrigen ist die Aktivkohle sehr kostengünstig einsetzbar. In diesem Zusammenhang muß erwähnt werden, daß sich das erfindungsgemäße Verfahren insbesondere auch dadurch auszeichnet, daß die an der aktiven Oberfläche des Katalysators, d. h. hier der Aktivkohle, adsorbierten Kohlenwasserstoffmoleküle auf der Oberfläche durch das Oxidationsmittel Ozon oxidiert, d. h. ständig entfernt und in Wasser und Kohlendioxid aufgespalten werden. Wasser und Kohlendioxid entweichen dann als unschädliche Komponenten in die Umgebung.

Die Vorrichtung zur Durchführung des Verfahrens weist gemäß einem Ausführungsbeispiel der Erfindung das Merkmal auf, daß in dem ersten Abschnitt des Abluftleitkanals wenigstens ein UV-Strahler mit einer Wellenlänge von vorzugsweise 254 nm und einer Wellenlänge von vorzugsweise 185 nm angeordnet ist und daß in dem zweiten Abschnitt des Abluftleitkanals ein von porösem Trägermaterial gebildeter Katalysator angeordnet ist.

Die Intensität der UV-C Strahlung kann insgesamt verstärkt werden, indem der erste Abschnitt des Abluftleitkanals im Bereich der UV-C Strahlung mit reflektierenden Oberflächen versehen wird. Der im Rahmen der Erfindung eingesetzte Katalysator besteht vorzugsweise aus Aktivkohle. Alternativ ist es jedoch durchaus möglich, daß der Katalysator aus einem aus Aktivkohle, Bimsstein, Zeolithen oder Ton, gebildetem Trägermaterial mit einer Beschichtung aus katalytisch wirkenden Metalloxiden versehen ist. Hier kommen insbesondere Oxide von Mn, Fe, Co, Ni, Zn, Si, Ti oder Zr in Frage. Weiterhin ist es im Rahmen der Erfindung möglich, die Edelmetalle Pt, Pd oder Rh, als Beschichtung einzusetzen. Gegebenenfalls ist es auch möglich, daß die Beschichtungen aus Mischungen der genannten Metalloxide und der genannten Edelmetalle bestehen.

Von Vorteil kann es sein, wenn eine Regeleinrichtung vorgesehen ist, die in Abhängigkeit der Meßwerte von im Abluftleitkanal angeordneten Sensoren, die die Schadstoffkonzentration erfassen, die Intensität der Oxidation, d. h. die Intensität der Ionisation, bzw. der UV-C Strahlung, steuert. Es wird so möglich, die erfindungsgemäße Vorrichtung sehr energiesparend zu betreiben, wobei der Energieaufwand exakt an die jeweiligen Erfordernisse anpaßbar ist. Letztlich wird durch einen derartigen Betrieb der Vorrichtung die Standzeit des Katalysators und der Ionisationsröhre, bzw. des UV-Strahlers verlängert, so daß sich auch hier eine Kosteneinsparung ergibt.

Die erfindungsgemäß eingesetzte UV-C Strahlung unterschiedlicher Wellenlängen ist geeignet, auch höhere Kohlenwasserstoffkonzentrationen im Bereich von einigen hundert mg/m³ Gesamtkohlenwasserstoffgehalt abzubauen. Es ergibt sich zum einen der Effekt, daß aufgrund der eingesetzten Strahlung von unterhalb von unterhalb 300 nm, vorzugsweise von 254 nm eine Anregung der Kohlenwasserstoffe auf höhere energetische Niveaus bewirkt wird. Gleichzeitig wird eine erhöhte Menge an Ozon erzeugt, was insbesondere durch einen Anteil einer Wellenlänge von 185 nm ausgelöst wird. Hieraus ergibt sich der Effekt, daß die auf ein höheres energetisches Niveau angeregten Kohlenwasserstoffe sehr viel schneller mit den Radikalen reagieren, d. h. oxidiert werden. Das Ozon zerfällt in molekularen Sauerstoff und Radikale, wobei die Radikalen eine zumindest teilweise Oxidation der Kohlenwasserstoffmoleküle der Abluft auslösen. Der erhöhte Ozonanteil beschleunigt gleichfalls die Oxidation der Kohlenwasserstoffmoleküle, wobei insgesamt der Anteil der Kohlenwasserstoffmoleküle entsprechend dem höheren Ozonanteil höher sein kann.

In den sich anschließenden zweiten Abschnitt des Abluftleitkanals erfolgt eine katalytische Oxidation der Kohlenwasserstoffmoleküle der Abluft an der aktiven Oberfläche des Katalysators. Die Kohlenwasserstoffmoleküle lagern sich an der Oberfläche des Katalysators an. Gleichzeitig zerfällt das hinzutretende Ozon an der Oberfläche des Katalysators unter Bildung von Sauerstoffmolekülen und Radikalen. Die Radikalen bewirken dann die Oxidation, d. h. den Abbau, der an der Oberfläche des Katalysators angelagerten Kohlenwasserstoffmoleküle. Durch den Katalysator erfolgt eine zwangsweise Zusammenführung der Kohlenwasserstoffmoleküle mit dem Ozon, wodurch spontan auch die Oxidation der Kohlenwasserstoffe stattfindet. Durch die Anordnung des Katalysators ist es somit sichergestellt worden, daß die Kohlenwasserstoffmoleküle in einem sehr hohen Anteil zu Wasser und CO₂ umgesetzt werden können. Insbesondere ist es überraschend, daß dieser Vorgang bei Raumtemperatur ohne jede weitere Energiezufuhr abläuft.

Im übrigen wird das überschüssige Ozon an der Oberfläche des Katalysators zu molekularem Luftsauerstoff abgebaut. Das überschüssige Ozon bewirkt also keinerlei Umweltschädigung. Insgesamt ist das erfindungsgemäß eingesetzte Verfahren sehr umweltfreundlich. Insbesondere bei einer nachgeschalteten Ionisation ist es sogar möglich, gereinigte Abluft als Zuluft Innenräumen zuzuführen. Die abschließende Ionisation bewirkt eine Anreicherung mit Sauerstoffionen und daraus resultierend einen nochmaligen Abbau restlicher Schadstoffmoleküle in der Zuluft, sowie in den Innenräumen.

## Patentansprüche

1. Verfahren zur Reinigung von schadstoffhaltiger, gasförmige Kohlenwasserstoff-Emissionen enthaltender Abluft bei Durchsatzmengen zwischen 1.000 - 10.000 m³/h in einem Abluftleitkanal,
unter Einsatz einer das energetische Niveau der Kohlenwasserstoffe anhebenden UV-C Strahlung und eines Katalysators,
bei dem die Abluft in einem ersten Abschnitt des Abluftleitkanals einer UV-C Strahlung mit einer Wellenlänge von unterhalb 300 nm ausgesetzt wird, die eine Anregung der Kohlenwasserstoffe auf höhere energetische Niveaus bewirkt, und außerdem einer UV-C Strahlung mit einer Wellenlänge von etwa 185 nm ausgesetzt wird, die zusätzlich eine Bildung von Ozon, von molekularem Sauerstoff und Radikalen aus dem Ozon bewirkt, wobei eine teilweise Oxidation der Kohlenwasserstoffmoleküle in der Gasphase erfolgt, und
bei dem in einem sich anschließenden zweiten Abschnitt eine katalytische Oxidation der Kohlenwasserstoffmoleküle an der aktiven Oberfläche eines Katalysators derart durchgeführt wird, dass die Kohlenwasserstoffmoleküle adsorbiert, dann auf der aktiven Oberfläche durch das zusätzlich gebildete Ozon und/oder die Radikale oxidiert und von der Oberfläche des Katalysators in Form von H₂O und CO₂ als Reaktionsprodukte entfernt werden.

2. Verfahren nach Anspruch 1, **dadurch gekennzeichnet, dass** in dem ersten Abschnitt des Abluftleitkanals zur Anregung der Kohlenwasserstoffe auf höhere energetische Niveaus eine UV-C Strahlung mit einer Wellenlänge von etwa 254 nm eingesetzt wird.

3. Verfahren nach einem der Ansprüche 1 - 2, **dadurch gekennzeichnet, dass** die Abluft im Abluftleitkanal zusätzlich mittels Koronaentladungen ionisiert wird.

4. Verfahren nach einem der Ansprüche 1 - 3, **dadurch gekennzeichnet, dass** die katalytische Oxidation durch katalytische Aktivkohle erfolgt.

5. Verfahren nach einem der Ansprüche 1 - 3, **dadurch gekennzeichnet, dass** die katalytische Oxidation an einer Beschichtung aus katalytischen Metalloxiden auf einem aus Aktivkohle, Bimsstein, Zeolithen oder Ton gebildeten Trägermaterial erfolgt.

6. Verfahren nach einem der Ansprüche 1 - 5, **dadurch gekennzeichnet, dass** in einem nachgeschalteten dritten Abschnitt eine Ionisation der Abluft erfolgt.

7. Vorrichtung zur Durchführung des Verfahrens nach Anspruch 1,
unter Einsatz einer das energetische Niveau der Kohlenwasserstoffe anhebenden UV-C Strahlung und eines Katalysators,
wobei in einem ersten Abschnitt des Abluftleitkanals wenigstens ein UV-Strahler vorgesehen ist, der die Abluft mit einer UV-C Strahlung mit einer Wellenlänge von unterhalb 300 nm aussetzt, die eine Anregung der Kohlenwasserstoffe auf höhere energetische Niveaus bewirkt, und außerdem einer UV-C Strahlung einer Wellenlänge von etwa 185 nm aussetzt, die zusätzlich eine Bildung von Ozon, von molekularem Sauerstoff und Radikalen aus dem Ozon bewirkt, wobei eine teilweise Oxidation der Kohlenwasserstoffmoleküle in der Gasphase erfolgt, und
wobei in einem sich anschließenden zweiten Abschnitt ein Katalysator vorgesehen ist, an dessen Oberfläche eine katalytische Oxidation der Kohlenwasserstoffmoleküle erzielt wird.

8. Vorrichtung nach Anspruch 7, **dadurch gekennzeichnet, dass** der erste Abschnitt des Abluftleitkanals im Bereich der UV-C Strahlung reflektierende Oberflächen aufweist.

9. Vorrichtung nach einem der Ansprüche 7 - 8, **dadurch gekennzeichnet, dass** der Katalysator von katalytischer Aktivkohle gebildet ist.

10. Vorrichtung nach einem der Ansprüche 7 - 9, **dadurch gekennzeichnet, dass** der Katalysator von einem aus Aktivkohle, Bimsstein, Zeolithen oder Ton gebildeten Trägermaterial mit einer Beschichtung aus katalytischen Metalloxiden gebildet ist.

11. Vorrichtung nach einem der Ansprüche 7 - 10, **dadurch gekennzeichnet, dass** der Katalysator mit einer Beschichtung aus Oxiden von Mn, Fe, Co, Ni, Zn, Si, Ti, oder Zr versehen ist.

12. Vorrichtung nach einem der Ansprüche 7 - 11, **dadurch gekennzeichnet, dass** der Katalysator mit einer Beschichtung aus katalytischen Metalloxiden in einer Mischung mit Pt, Pd oder Rh versehen ist.

13. Vorrichtung nach einem der Ansprüche 7 - 12, **dadurch gekennzeichnet, dass** eine Regeleinrichtung vorgesehen ist, die in Abhängigkeit der Messwerte von im Abluftleitkanal angeordneten Sensoren, die die Konzentration der Kohlenwasserstoffe erfassen, die Intensität der Oxydation über die Intensität der UV-C Strahlung steuern.

## Claims

1. A method for decontaminating pollutant-containing exhaust air which contains gaseous hydrocarbon emissions, at throughflow rates of between 1,000 and 10,000 m³/h in an air exhaust duct,
using UV-C radiation which raises the energy level of the hydrocarbons, and a catalyst,
wherein in a first zone of the air exhaust duct the exhaust air is exposed to UV-C radiation having a wavelength under 300 nm which excites the hydrocarbons to higher energy levels, and also to UV-C radiation having a wavelength of about 185 nm which additionally promotes the formation of ozone, and molecular oxygen and radicals from the ozone, while partial oxidation of the hydrocarbon molecules takes place during the gas phase, and
wherein in a subsequent second zone catalytic oxidation of the hydrocarbon molecules is effected on the active surface of a catalyst so that the hydrocarbon molecules are adsorbed, then oxidised on the active surface by the ozone additionally formed and/or the radicals, and are removed from the surface of the catalyst as reaction products in the form of H₂O and CO₂.

2. A method according to claim 1, **characterised in that** in the first zone of the air exhaust duct, UV-C radiation having a wavelength of about 254 nm is used to excite the hydrocarbons to higher energy levels.

3. A method according to one of claims 1 and 2, **characterised in that** the exhaust air in the air exhaust duct is additionally ionized by corona discharge.

4. A method according to one of claims 1 to 3, **characterised in that** the catalytic oxidation is carried out using catalytic active carbon.

5. A method according to one of claims 1 to 3, **characterised in that** the catalytic oxidation is carried out on a layer of catalytic metal oxides on a carrier material formed from active carbon, pumice, zeolites or clay.

6. A method according to one of claims 1 to 5, **characterised in that** ionization of the exhaust air takes place in a subsequent third zone.

7. An apparatus for carrying out the process according to claim 1,
using UV-C radiation which raises the energy level of the hydrocarbons, and a catalyst,
wherein in a first zone of the air exhaust duct at least one UV radiator is provided which exposes the exhaust air to UV-C radiation having a wavelength under 300 nm which excites the hydrocarbons to higher energy levels, and also to UV-C radiation having a wavelength of about 185 nm which additionally brings about the formation of ozone, as well as molecular oxygen and radicals from the ozone, while partial oxidation of the hydrocarbon molecules takes place in the gas phase, and
wherein, in a subsequent second zone, a catalyst is provided on the surface of which the hydrocarbon molecules are catalytically oxidised.

8. An apparatus according to claim 7, **characterised in that** the first zone of the air exhaust duct has reflective surfaces in the region of the UV-C radiation.

9. An apparatus according to one of claims 7 and 8, **characterised in that** the catalyst is formed by catalytic active carbon.

10. An apparatus according to one of claims 7 to 9, **characterised in that** the catalyst is formed by a carrier material formed from active carbon, pumice, zeolites or clay, with a layer of catalytic metal oxides.

11. An apparatus according to one of claims 7 to 10, **characterised in that** the catalyst is provided with a layer of oxides of Mn, Fe, Co, Ni, Zn, Si, Ti or Zr.

12. An apparatus according to one of claims 7 to 11, **characterised in that** the catalyst is provided with a layer of catalytic metal oxides in admixure with Pt, Pd or Rh.

13. An apparatus according to one of claims 7 to 12, **characterised in that** a regulating device is provided which controls the intensity of the oxidation by means of the intensity of the UV-C radiation in response to the measurements of sensors arranged in the air exhaust duct which detect the concentration of the hydrocarbons.

## Revendications

1. Procédé d'épuration d'air d'échappement contenant des émissions d'hydrocarbure gazeuses, contenant des substances nocives, pour des débits compris entre 1.000 et 10.000 m³/h dans un canal de guidage d'air d'échappement,
avec utilisation d'un rayonnement UV-C, augmentant le niveau énergétique des hydrocarbures, et d'un catalyseur, pour lequel, dans un premier tronçon du canal de guidage d'air d'échappement, l'air d'échappement est exposé à un rayonnement UV-C ayant une longueur d'onde inférieure à 300 nm, provoquant une excitation des hydrocarbures leur faisant atteindre des niveaux énergétiques plus élevés, et en outre est exposé à un rayonnement UV-C d'une longueur d'onde d'environ 185 nm, qui en plus provoque une formation d'ozone, d'oxygène moléculaire et de radicaux issus de l'ozone, une oxydation partielle des molécules d'hydrocarbure dans la phase gazeuse étant effectuée, et
pour lequel, dans un deuxième tronçon subséquent, est effectué une oxydation catalytique des molécules d'hydrocarbure, sur la surface active d'un catalyseur, de manière que les molécules d'hydrocarbure soient adsorbées, puis oxydées sur la surface active, par l'ozone et/ou les radicaux, formés à titre supplémentaire, et éliminées de la surface du catalyseur sous la forme de H₂O et CO₂, en tant que produits de réaction.

2. Procédé selon la revendication 1, **caractérisé en ce que**, dans le premier tronçon du canal de guidage d'air d'échappement, un rayonnement UV-C d'une longueur d'onde d'environ 254 nm est mis en oeuvre afin d'exciter les hydrocarbures pour leur faire atteindre des niveaux énergétiques plus élevés.

3. Procédé selon l'une des revendications 1 à 2, **caractérisé en ce que** l'air d'échappement passant dans le canal de guidage d'air d'échappement est en plus soumis à ionisation par des décharges corona.

4. Procédé selon l'une des revendications 1 à 3, **caractérisé en ce que** l'oxydation catalytique s'effectue au moyen de charbon actif catalytique.

5. Procédé selon l'une des revendications 1 à 3, **caractérisé en ce que** l'oxydation catalytique s'effectue sur un revêtement constitué d'oxydes métalliques catalytiques, sur un matériau support, formé de charbon actif, pierre ponce, zéolites ou argile.

6. Procédé selon l'une des revendications 1 à 5, **caractérisé en ce qu'**une ionisation de l'air d'échappement est effectuée dans un troisième tronçon aval.

7. Dispositif de mise en oeuvre du procédé selon la revendication 1,
avec utilisation d'un rayonnement UV-C, augmentant le niveau énergétique des hydrocarbures, et d'un catalyseur,
où, en un premier tronçon du canal de guidage d'air d'échappement, est prévu au moins un émetteur de rayonnement UV, qui expose l'air d'échappement à un rayonnement UV-C d'une longueur d'onde inférieure à 300 nm, qui provoque une excitation des hydrocarbures, leur faisant atteindre un niveau énergétique plus élevé, et expose en outre à un rayonnement UV-C d'une longueur d'onde d'environ 185 nm, qui provoque en plus une formation d'ozone, d'oxygène moléculaire et de radicaux issus de l'ozone, une oxydation partielle des molécules d'hydrocarbure dans la phase gazeuse étant effectuée, et
où, dans un deuxième tronçon subséquent, est prévu un catalyseur, sur la surface duquel est obtenue une oxydation catalytique des molécules d'hydrocarbure.

8. Dispositif selon la revendication 7, **caractérisé en ce que** le premier tronçon du canal de guidage d'air d'échappement présente des surfaces qui réfléchissent dans la plage du rayonnement UV-C.

9. Dispositif selon l'une des revendications 7 à 8, **caractérisé en ce que** le catalyseur est formé par du charbon actif catalytique.

10. Dispositif selon l'une des revendications 7 à 9, **caractérisé en ce que** le catalyseur est formé d'un matériau support constitué de charbon actif, pierre ponce, zéolites ou argile, avec un revêtement en oxydes métalliques catalytiques.

11. Dispositif selon l'une des revendications 7 à 10, **caractérisé en ce que** le catalyseur est pourvu d'un revêtement en oxydes de Mn, Fe, Co, Ni, Zn, Si, Ti, ou Zr.

12. Dispositif selon l'une des revendications 7 à 11, **caractérisé en ce que** le catalyseur est pourvu d'un revêtement en oxydes métalliques, en un mélange, avec Pt, Pd ou Rh.

13. Dispositif selon l'une des revendications 7 à 12, **caractérisé en ce qu'**un dispositif de réglage est prévu qui, en fonction des valeurs de mesure venant de détecteurs disposés dans le canal de guidage d'air d'échappement, capteurs appréhendant la concentration des hydrocarbures, commande l'intensité de l'oxydation par le biais de l'intensité du rayonnement UV-C.
